(19) Europäisches Patentamt / European Patent Office / Office européen des brevets

(11) **EP 4 668 359 A1**

(12) **EUROPEAN PATENT APPLICATION**
published in accordance with Art. 153(4) EPC

(43) Date of publication:
**24.12.2025 Bulletin 2025/52**

(21) Application number: 23938946.3

(22) Date of filing: **01.06.2023**

(51) International Patent Classification (IPC):
*H01M 4/48* (2010.01)

(52) Cooperative Patent Classification (CPC):
**C01G 53/42; C01G 3/006; C01G 31/006;
C01G 33/006; C01G 45/22; C01G 49/0027;
C01G 53/50; H01M 4/485; H01M 4/505;
H01M 4/525; H01M 10/0525; H01M 10/054;**
C01P 2002/72; C01P 2004/61; C01P 2006/40;
(Cont.)

(86) International application number:
**PCT/CN2023/097762**

(87) International publication number:
**WO 2024/243957 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Ningde, Fujian 352100 (CN)**

(72) Inventors:
• WANG, Bangrun
  **Ningde, Fujian 352100 (CN)**
• ZHANG, Xingwen
  **Ningde, Fujian 352100 (CN)**
• LIU, Na
  **Ningde, Fujian 352100 (CN)**

(74) Representative: **Gong, Jinping
CocreateIP
Neumarkter Straße 21
81673 München (DE)**

(54) **ELECTRODE MATERIAL AND PREPARATION METHOD THEREFOR, BATTERY, AND ELECTRIC DEVICE**

(57)    The present application provides a sodium-doped lithium-rich metal oxide material and a preparation method thereof, a positive electrode material, a positive electrode plate, a battery, and an electric apparatus. The sodium-doped lithium-rich metal oxide material includes a compound $Li_{m-x}Na_xMO_y$. The sodium-doped lithium-rich metal oxide material of the present application facilitates reducing the resistance to lithium-ion extraction from the crystal lattice, thereby increasing the charging capacity of the battery.

FIG. 7

**(Cont. next page)**

(52) Cooperative Patent Classification (CPC): (Cont.)
H01M 2004/028; Y02E 60/10

## Description

### TECHNICAL FIELD

The present application relates to the field of secondary battery technologies, and in particular, to an electrode material, a preparation method of the electrode material, a battery, and an electric apparatus.

### BACKGROUND

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to great development of secondary batteries, higher requirements are imposed on their charging capacity and other performance metrics.

### SUMMARY

The present application is made in view of the above problems and is intended to provide an electrode material, a preparation method of the electrode material, a battery, and an electric apparatus. In the electrode material of the present application, sodium doped at lithium sites facilitates the expansion of interlayer spacing in the crystal lattice of the material, reducing the resistance to lithium-ion extraction from the crystal lattice, thereby increasing the charging capacity of the battery.

To achieve the above purpose, a first aspect of the present application provides an electrode material, including $Li_{m-x}Na_xMO_y$, where,

M includes one or more elements selected from Ni, Co, Fe, Mn, Zn, Mg, Ca, Cu, Sn, Mo, Ru, Ir, V, Nb, or Cr; and

$$2 \leq m \leq 5; 0.04 \leq x \leq 1; \text{ and } 2 \leq y \leq 4.$$

Conventional lithium-rich metal oxide materials contain a high lithium-ion content, resulting in significant resistance to lithium-ion extraction from the crystal lattice during a charging process, making it difficult for lithium ions to be extracted, leading to a lower charging capacity of a battery.

Therefore, in the present application, an electrode material is obtained by doping a certain amount of sodium to partially substitute a portion of lithium in the lithium-rich metal oxide material. Since the radius of sodium ions is larger than that of lithium ions, doping a certain amount of sodium at lithium sites facilitates the expansion of interlayer spacing in the crystal lattice of the material, reducing the resistance to lithium-ion extraction from the crystal lattice, thereby increasing the charging capacity of the battery. Additionally, this approach improves the effective utilization rate of lithium ions in the material, reducing costs.

In any embodiment, $0.01 \leq x/m \leq 0.25$, optionally $0.02 \leq x/m \leq 0.2$, more optionally $0.05 \leq x/m \leq 0.15$.

Therefore, doping an appropriate amount of sodium at lithium sites can expand the interlayer spacing in the crystal lattice, reducing the resistance to lithium-ion extraction to increase the charging capacity of the battery. At the same time, it allows the material to have a high lithium content to improve the energy density of the material. Furthermore, doping an appropriate amount of sodium facilitates reducing the free sodium content on a surface of the material, which also contributes to reducing the resistance to lithium-ion extraction, thereby increasing the charging capacity of the battery.

In any embodiment, a median particle size by volume Dv50 of the electrode material is 1 $\mu$m to 12 $\mu$m, optionally 2 $\mu$m to 10 $\mu$m, more optionally 3 $\mu$m to 6 $\mu$m.

Therefore, this shortens the extraction path and time for lithium ions in the material, facilitating capacity utilization, while simultaneously suppressing the increase in free lithium content due to water absorption on the surface of the material, which further facilitates reducing the resistance to lithium-ion extraction, thereby increasing the charging capacity of the battery.

In any embodiment, the electrode material further includes free lithium and free sodium, and based on a mass calculation of the electrode material, a total mass content of the free lithium and free sodium is less than or equal to 1%, optionally less than or equal to 0.5%.

Therefore, this facilitates reducing the resistance to lithium-ion extraction, thereby increasing the charging capacity of the battery.

In any embodiment, a 2θ value of a strongest peak in an X-ray diffraction spectrum of the electrode material is smaller than a 2θ value of a strongest peak in an X-ray diffraction spectrum of an electrode material not containing sodium; and the electrode material not containing sodium includes $Li_{m'}M'O_{y'}$, where M' includes the same elements as M, m' is equal to the m, and y' is equal to the y.

Therefore, according to the Bragg equation $\lambda = 2d \sin\theta$, compared to the electrode material not containing sodium, the electrode material of the present application has a smaller $2\theta$, that is, a smaller $\theta$, indicating a larger interplanar spacing d and a larger interlayer spacing in the crystal lattice, which facilitates reducing the resistance to lithium-ion extraction, thereby increasing the charging capacity of the battery.

In any embodiment, the electrode material includes one or more of $Li_{2-x}Na_xM^1O_2$, $Li_{2-x}Na_xM^2O_3$, $Li_{3-x}Na_xM^3O_4$, and $Li_{5-x}Na_xM^4O_4$; where $M^1$ includes one or more elements selected from Ni, Co, Fe, Mn, Zn, Mg, Ca, or Cu; $M^2$ includes one or more elements selected from Mn, Sn, Mo, Ru, or Ir; $M^3$ includes one or more elements selected from V, Nb, Cr, or Mo; $M^4$ includes one or more elements selected from Fe, Cr, V, or Mo; and x in $Li_{2-x}Na_xM^1O_2$, $Li_{2-x}Na_xM^2O_3$, $Li_{3-x}Na_xM^3O_4$, and $Li_{5-x}Na_xM^4O_4$ is independently 0.04 to 1.

In any embodiment, the electrode material includes one or more of $Li_{1.8}Na_{0.2}NiO_2$, $Li_{1.96}Na_{0.04}NiO_2$, $Li_{1.6}Na_{0.4}NiO_2$, $Li_{1.98}Na_{0.02}NiO_2$, $Li_{1.5}Na_{0.5}NiO_2$, $Li_{1.8}Na_{0.2}CuO_2$, $Li_{1.8}Na_{0.2}MnO_3$, $Li_{2.7}Na_{0.3}VO_4$, $Li_{2.7}Na_{0.3}NbO_4$, $Li_{4.5}Na_{0.5}FeO_4$, $Li_{4.9}Na_{0.1}FeO_4$, $Li_{4.75}Na_{0.25}FeO_4$, $Li_{4.25}Na_{0.75}FeO_4$, $Li_{4.0}NaFeO_4$, or $Li_{4.95}Na_{0.05}FeO_4$.

Therefore, the use of the above electrode materials facilitates further reducing the resistance to lithium-ion extraction from the crystal lattice, thereby increasing the charging capacity of the battery.

In any embodiment, a lithium-ion diffusion coefficient of the electrode material is greater than or equal to $1.0 \times 10^{-13}$ cm$^2$/s, optionally greater than or equal to $1.0 \times 10^{-10}$ cm$^2$/s.

Therefore, the electrode material of the present application reduces the resistance to lithium-ion extraction from the crystal lattice and increases a lithium-ion diffusion rate in the material, thereby increasing the charging capacity of the battery.

In any embodiment, the electrode material is a positive electrode material.

A second aspect of the present application further provides a method for preparing an electrode material, including:

mixing a lithium source, a sodium source, and a source of element M, followed by sintering in an inert atmosphere to obtain the electrode material; where

the electrode material includes $Li_{m-x}Na_xMO_y$, where M includes one or more elements selected from Ni, Co, Fe, Mn, Zn, Mg, Ca, Cu, Sn, Mo, Ru, Ir, V, Nb, or Cr; $2 \leq m \leq 5$; $0.04 \leq x \leq 1$; and $2 \leq y \leq 4$.

Therefore, in the present application, an electrode material is obtained by doping a certain amount of sodium to partially substitute a portion of lithium in the lithium-rich metal oxide material. Since the radius of sodium ions is larger than that of lithium ions, doping a certain amount of sodium facilitates the expansion of interlayer spacing in the crystal lattice, reducing the resistance to lithium-ion extraction from the crystal lattice, thereby increasing the charging capacity of the battery. Additionally, this approach improves the effective utilization rate of lithium ions in the material, reducing costs.

In any embodiment, a molar ratio of lithium element in the lithium source to sodium element in the sodium source is 2 to 99.

In any embodiment, the sintering temperature is 400°C to 1000°C, optionally 500°C to 1000°C, more optionally 600°C to 900°C; and/or,

the sintering time is 1 h to 15 h, optionally 2 h to 15 h, more optionally 4 h to 12 h.

Therefore, the use of the above sintering temperature and/or sintering time facilitates doping an appropriate amount of sodium at lithium sites in the lithium-rich metal oxide material, thereby reducing the resistance to lithium-ion extraction and increasing the charging capacity of the battery.

In any embodiment, the method further includes performing crushing and sieving; and/or,

in the method, the mixing is performed by ball milling.

In any embodiment, the lithium source, the sodium source, and the source of element M each independently include one or more of an oxide, hydroxide, hydrated hydroxide, halide, sulfate, carbonate, nitrate, oxalate, and acetate; optionally, the sodium source includes one or more of $Na_2O$, $Na_2CO_3$, $Na_2C_2O_4$, and $CH_3COONa$.

A third aspect of the present application provides a battery, including the electrode material of the first aspect of the present application or an electrode material prepared by the method of the second aspect of the present application.

A fourth aspect of the present application provides an electric apparatus, including the battery of the third aspect of the present application.

## BRIEF DESCRIPTION OF DRAWINGS

FIG. 1 is a schematic diagram of a secondary battery according to an embodiment of the present application.
FIG. 2 is an exploded view of the secondary battery according to the embodiment of the present application shown in FIG. 1.

FIG. 3 is a schematic diagram of a battery module according to an embodiment of the present application.

FIG. 4 is a schematic diagram of a battery pack according to an embodiment of the present application.

FIG. 5 is an exploded view of the battery pack according to the embodiment of the present application shown in FIG. 4.

FIG. 6 is a schematic diagram of an electric apparatus using a secondary battery as a power source according to an embodiment of the present application.

FIG. 7 is an X-ray diffraction spectrum of a sodium-doped lithium-rich metal oxide material according to Example 1 of the present application.

FIG. 8 is a pH curve and an ERC curve of a sodium-doped lithium-rich metal oxide according to Example 1 of the present application.

Description of reference signs:

1 battery pack; 2 upper box body; 3 lower box body; 4 battery module; 5 secondary battery; 51 housing; 52 electrode assembly; and 53 top cover assembly.

## DESCRIPTION OF EMBODIMENTS

The following specifically discloses embodiments of an electrode material and a preparation method thereof, a secondary battery, a battery module, a battery pack, and an electric apparatus in the present application with appropriate reference to detailed descriptions of accompanying drawings. However, there may be cases in which unnecessary detailed descriptions are omitted. For example, detailed description of a well-known matter or repeated description of an actually identical structure has been omitted. This is to avoid unnecessarily prolonging the following descriptions, for ease of understanding by persons skilled in the art. Additionally, the accompanying drawings and the following descriptions are provided for persons skilled in the art to fully understand the present application and are not intended to limit the subject described in the claims.

"Ranges" disclosed in the present application are defined in the form of lower and upper limits. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. Additionally, if minimum limit values of a range are given as 1 and 2, and maximum limit values of the range are given as 3, 4, and 5, the following ranges can all be envisioned: 1-3, 1-4, 1-5, 2-3, 2-4, and 2-5. In the present application, unless otherwise specified, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. Additionally, a parameter expressed as an integer greater than or equal to 2 is equivalent to disclosure that the parameter is, such as, an integer among 2, 3, 4, 5, 6, 7, 8, 9, 10, 11, 12, and so on.

Unless otherwise specified, all embodiments and optional embodiments of the present application may be combined with each other to form new technical solutions.

Unless otherwise specified, all the technical features and optional technical features of the present application can be combined with each other to form new technical solutions.

Unless otherwise specified, all the steps in the present application can be performed sequentially or randomly, preferably, performed sequentially. For example, a method including steps (a) and (b) indicates that the method may include steps (a) and (b) performed sequentially or may include steps (b) and (a) performed sequentially. For example, the foregoing method may further include step (c), indicating that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in the present application are inclusive or may be exclusive. For example, the terms "include" and "contain" can mean that other unlisted components may also be included or contained, or only listed components are included or contained.

Unless otherwise specified, in the present application, the term "or" is inclusive. For example, the term "A or B" means "A, B, or both A and B". More specifically, any one of the following conditions satisfies the condition "A or B": A is true (or present) and B is false (or not present); A is false (or not present) and B is true (or present); or both A and B are true (or present).

Unless otherwise specified, in the present application, the term "median particle size by volume Dv50" refers to a particle size where the cumulative distribution by volume reaches 50% as counted from the small particle size side.

Unless otherwise specified, in the present application, the term "free lithium" refers to a lithium-containing compound present on a surface of a sodium-doped lithium-rich metal oxide material, where such lithium-containing compound is different from the above compound $Li_{m-x}Na_xMO_y$. Such lithium-containing compound includes, but is not

limited to, $Li_2O$, $LiOH$, $Li_2CO_3$, $LiHCO_3$, and the like. The term "surface" refers to an outermost layer of the sodium-doped lithium-rich metal oxide material and a region extending inward from the outermost layer by a thickness of 10-200 nm.

Unless otherwise specified, in the present application, the term "free sodium" refers to a sodium-containing compound present on a surface of a sodium-doped lithium-rich metal oxide material, where such sodium-containing compound is different from the above compound $Li_{m-x}Na_xMO_y$. Such sodium-containing compound includes, but is not limited to, $Na_2O$, $NaOH$, $Na_2CO_3$, $NaHCO_3$, and the like. The definition of "surface" is the same as described above.

[Secondary battery]

The secondary battery, also referred to as a rechargeable battery or a storage battery, is a battery that can be charged after being discharged to activate active materials for continuous use.

Normally, the secondary battery includes a positive electrode plate, a negative electrode plate, a separator, and an electrolyte. During charge and discharge process of the battery, active ions (for example, lithium ions) are intercalated and deintercalated between the positive electrode plate and the negative electrode plate. The separator is disposed between the positive electrode plate and the negative electrode plate to mainly prevent short circuit between positive and negative electrodes and to allow the active ions to pass through. The electrolyte is between the positive electrode plate and the negative electrode plate to mainly conduct the active ions.

[Electrode material]

An embodiment of the present application provides an electrode material, including $Li_{m-x}Na_xMO_y$, where:

M includes one or more elements selected from Ni, Co, Fe, Mn, Zn, Mg, Ca, Cu, Sn, Mo, Ru, Ir, V, Nb, or Cr; $2 \leq m \leq 5$, for example, m may be 2, 2.5, 3, 3.5, 4, 4.5, 5, or falls within a range defined by any two of these values; $0.04 \leq x \leq 1$, for example, x may be 0.04, 0.06, 0.08, 0.1, 0.2, 0.3, 0.4, 0.5, 0.6, 0.7, 0.8, 0.9, 1, or falls within a range defined by any two of these values; and $2 \leq y \leq 4$, for example, y may be 2, 2.5, 3, 3.5, 4, or falls within a range defined by any two of these values.

Conventional lithium-rich metal oxide materials contain high lithium-ion content, resulting in significant resistance to lithium-ion extraction from the crystal lattice during a charging process, making it difficult for lithium ions to be extracted, leading to a lower charging capacity of a battery.

Although the mechanism is not yet clear, this applicant unexpectedly discovered that: in the present application, an electrode material is obtained by doping a certain amount of sodium to partially substitute a portion of lithium in the lithium-rich metal oxide material. Since the radius of sodium ions is larger than that of lithium ions, doping a certain amount of sodium at lithium sites facilitates the expansion of interlayer spacing in the crystal lattice, reducing the resistance to lithium-ion extraction from the crystal lattice, thereby increasing the charging capacity of the battery. Additionally, this approach improves the effective utilization rate of lithium ions in the material, reducing costs.

It should be noted that in the electrode material of the present application, the ratio of each element generally refers to the elemental ratio of the material before the material is formed into an electrode and assembled into a battery for formation. Persons skilled in the art can understand that after the battery is subjected to processes such as formation and cycling, some elements in the material may be consumed, or may be supplemented through a lithium supplementation agent or a sodium supplementation agent, resulting in the elemental ratios no longer falling within the above ranges. In such cases, the electrode material should still be considered to fall within the protection scope of the present application. For example, before battery formation, the elemental ratios in the electrode material are all within the above ranges, but after battery formation or cycling, m in the material may be less than 2, and/or x may be less than 0.04, and/or y may be less than 2. If this occurs, the electrode material should still be considered to fall within the protection scope of the present application. For another example, before battery formation, the elemental ratios in the electrode material are all within the above ranges. However, after battery formation or cycling, m in the material may be greater than 5, and/or x may be greater than 1. If this occurs, the electrode material should still be considered to fall within the protection scope of the present application.

In some embodiments, $0.01 \leq x/m \leq 0.25$, optionally $0.02 \leq x/m \leq 0.2$, more optionally $0.05 \leq x/m \leq 0.15$. For example, x/m may be 0.01, 0.02, 0.03, 0.05, 0.07, 0.08, 0.09, 0.1, 0.12, 0.14, 0.15, 0.17, 0.18, 0.2, 0.23, 0.25, or falls within a range defined by any two of these values.

Therefore, doping an appropriate amount of sodium at lithium sites can expand the interlayer spacing in the crystal lattice, reducing the resistance to lithium-ion extraction to increase the charging capacity of the battery. At the same time, it allows the material to have a high lithium content to improve the energy density of the material. Furthermore, doping an appropriate amount of sodium facilitates reducing the free sodium content on a surface of the material, which also contributes to reducing the resistance to lithium-ion extraction, thereby increasing the charging capacity of the battery.

In some embodiments, the median particle size by volume Dv50 of the electrode material is 1 $\mu$m to 12 $\mu$m, optionally 2 $\mu$m to 10 $\mu$m, more optionally 3 $\mu$m to 6 $\mu$m. For example, the median particle size by volume Dv50 may be 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, or falls within a range defined by any two of these values.

Therefore, this shortens the extraction path and time for lithium ions in the material, facilitating capacity utilization, while simultaneously suppressing the increase in free lithium content due to water absorption on the surface of the material, which further facilitates reducing the resistance to lithium-ion extraction, thereby increasing the charging capacity of the battery.

In some embodiments, the median particle size by volume Dv50 is measured using conventional methods in the art. For example, the median particle size by volume Dv50 is measured according to the method specified in the national standard GB/T 19077-2016 "Particle Size Analysis - Laser Diffraction Methods", using deionized water as a solvent, with ultrasonic treatment for 5 minutes before testing.

In some embodiments, the electrode material further includes free lithium and free sodium, and, based on a mass calculation of the electrode material, a total mass content of the free lithium and free sodium is less than or equal to 1%, optionally less than or equal to 0.5%. For example, the total mass content of the free lithium and free sodium may be 0.05%, 0.1%, 0.15%, 0.2%, 0.25%, 0.3%, 0.35%, 0.4%, 0.45%, 0.5%, 0.55%, 0.6%, 0.7%, 0.8%, 0.9%, 1%, a range less than or equal to any of the above values, or falls within a range defined by any two of these values.

Therefore, this facilitates reducing the resistance to lithium-ion extraction, thereby increasing the charging capacity of the battery.

In some embodiments, the content of free lithium and free sodium is a well-known parameter in the art. The total mass content of free lithium and free sodium in the electrode material is measured using conventional methods in the art. For example, the total mass content of the free lithium and free sodium is measured by referring to the national standard GB/T9725-2007 "Chemical Reagent - General Rules for Potentiometric Titration", titrating the material with a hydrochloric acid solution, and using the consumption of hydrochloric acid solution corresponding to potential jump points on a titration curve for calculation.

In some embodiments, a 2$\theta$ value of a strongest peak in an X-ray diffraction spectrum of the electrode material is smaller than a 2$\theta$ value of a strongest peak in an X-ray diffraction spectrum of an electrode material not containing sodium; and the electrode material not containing sodium includes $Li_m$M'Oy', where M' includes the same elements as M, m' is equal to m, and y' is equal to y. The strongest peak refers to the peak with the highest intensity in the X-ray diffraction spectrum, and its corresponding 2$\theta$ value is the 2$\theta$ value of the strongest peak.

Therefore, according to the Bragg equation $\lambda = 2d \sin\theta$ (where $\lambda$ is the wavelength of the X-ray, d is the interplanar spacing, and $\theta$ is an angle between the X-ray and a corresponding crystal plane), compared to the electrode material not containing sodium, the electrode material of the present application has a smaller 2$\theta$, i.e., a smaller $\theta$, indicating a larger interplanar spacing d and a larger interlayer spacing in the crystal lattice, which facilitates reducing the resistance to lithium-ion extraction, thereby increasing the charging capacity of the battery.

In some embodiments, the X-ray diffraction spectrum is tested using conventional methods in the art. For example, by referring to the standard JISK 0131-1996, using a Bruker D8 Discover X-ray diffractometer. During testing, a copper target is used as an anode target, a Ni filter with a thickness of 0.02 mm is used to filter CuKp, $CuK_{\alpha}$ radiation is used as a radiation source with a wavelength of 0.154178 nm, a scanning 2$\theta$ angle range is 15° to 70°, and a scanning rate is 4°/min.

In some embodiments, the electrode material includes one or more of $Li_{2-x}Na_xM^1O_2$, $Li_{2-x}Na_xM^2O_3$, $Li_{3-x}Na_xM^3O_4$, and $Li_{5-x}Na_xM^4O_4$; where $M^1$ includes one or more elements selected from Ni, Co, Fe, Mn, Zn, Mg, Ca, or Cu; $M^2$ includes one or more elements selected from Mn, Sn, Mo, Ru, or Ir; $M^3$ includes one or more elements selected from V, Nb, Cr, or Mo; $M^4$ includes one or more elements selected from Fe, Cr, V, or Mo; and x in $Li_{2-x}Na_xM^1O_2$, $Li_{2-x}Na_xM^2O_3$, $Li_{3-x}Na_xM^3O_4$, and $Li_{5-x}Na_xM^4O_4$ is independently 0.04 to 1. For example, x may be 0.04, 0.05, 0.07, 0.08, 0.1, 0.2, 0.3, 0.5, 0.6, 0.7, 0.8, 0.9, 1, or falls within a range defined by any two of these values.

It should be noted that the above m is an integer such as 2, 3, or 5. However, after the battery is subjected to processes such as formation and cycling, lithium and sodium ions in the electrode material may be consumed, and it is possible that the sum m of lithium and sodium elements is a non-integer. If this occurs, the electrode material is still considered to fall within the above protection scope of the present application.

In some embodiments, the electrode material includes one or more of $Li_{1.8}Na_{0.2}NiO_2$, $Li_{1.96}Na_{0.04}NiO_2$, $Li_{1.6}Na_{0.4}NiO_2$, $Li_{1.98}Na_{0.02}NiO_2$, $Li_{1.5}Na_{0.5}NiO_2$, $Li_{1.8}Na_{0.2}CuO_2$, $Li_{1.8}Na_{0.2}MnO_3$, $Li_{2.7}Na_{0.3}VO_4$, $Li_{2.7}Na_{0.3}NbO_4$, $Li_{4.5}Na_{0.5}FeO_4$, $Li_{4.9}Na_{0.1}FeO_4$, $Li_{4.75}Na_{0.25}FeO_4$, $Li_{4.25}Na_{0.75}FeO_4$, $Li_{4.0}NaFeO_4$, or $Li_{4.95}Na_{0.05}FeO_4$.

Therefore, the use of the above electrode materials facilitates further reducing the resistance to lithium-ion extraction from the crystal lattice, thereby increasing the charging capacity of the battery.

In some embodiments, the electrode material includes one or more of $Li_{4.5}Na_{0.5}FeO_4$, $Li_{4.9}Na_{0.1}FeO_4$, $Li_{4.75}Na_{0.25}FeO_4$, $Li_{4.25}Na_{0.75}FeO_4$, $Li_{4.0}NaFeO_4$, or $Li_{4.95}Na_{0.05}FeO_4$.

In some embodiments, a lithium-ion diffusion coefficient of the electrode material is greater than or equal to 1.0 $\times$

$10^{-13}$ cm$^2$/s, optionally greater than or equal to $1.0 \times 10^{-10}$ cm$^2$/s. For example, the lithium-ion diffusion coefficient may be $1.0 \times 10^{-13}$ cm$^2$/s, $2.7 \times 10^{-13}$, $5 \times 10^{-13}$ cm$^2$/s, $5.8 \times 10^{-13}$, $8 \times 10^{-13}$ cm$^2$/s, $1.0 \times 10^{-12}$ cm$^2$/s, $3 \times 10^{-12}$ cm$^2$/s, $4.5 \times 10^{-12}$, $5 \times 10^{-12}$ cm$^2$/s, $8 \times 10^{-12}$ cm$^2$/s, $1.0 \times 10^{-11}$ cm$^2$/s, $3 \times 10^{-11}$ cm$^2$/s, $5 \times 10^{-11}$ cm$^2$/s, $7.2 \times 10^{-11}$, $9 \times 10^{-11}$ cm$^2$/s, $1.0 \times 10^{-10}$ cm$^2$/s, $1.8 \times 10^{-10}$, $3.7 \times 10^{-10}$, $5 \times 10^{-10}$ cm$^2$/s, $8 \times 10^{-10}$ cm$^2$/s, $1.0 \times 10^{-9}$ cm$^2$/s, $4.5 \times 10^{-9}$, $1.0 \times 10^{-8}$ cm$^2$/s, $6.0 \times 10^{-8}$, $1.0 \times 10^{-7}$ cm$^2$/s, $5.7 \times 10^{-7}$, $1.0 \times 10^{-6}$ cm$^2$/s, $1.0 \times 10^{-5}$ cm$^2$/s, and greater than or equal to any of the above values, or falls within a range defined by any two of these values.

Therefore, the electrode material of the present application reduces the resistance to lithium-ion extraction from the crystal lattice, and increases the lithium-ion diffusion rate in the material, thereby increasing the charging capacity of the battery.

In some embodiments, the lithium-ion diffusion coefficient is a well-known parameter in the art, and is generally measured using conventional methods in the art, such as the conventional GITT method in the art, and calculated based on Fick's first law and Fick's second law. The test method can be conducted according to the "results and discussion" section in the literature "Yang et al., Electrochimica Acta, 2012, 66:88-93";

$$\text{Lithium-ion diffusion coefficient } D = \frac{4}{\pi}\left(\frac{V_m}{A \times F \times n}\right)^2 \left[I_0\left(\frac{dE}{dx}\right)\Big/\left(\frac{dE}{d\sqrt{t}}\right)\right]^2 \; (t \ll L^2/D)$$

where $I_0$ is the applied pulse current ($\mu$A); $V_m$ is the molar volume of the sodium-doped lithium-rich metal oxide (cm$^3$/mol); F is the Faraday constant; A is an electrode surface area (cm$^2$); n is the charge number of lithium ions, n = 1; dE/dx is the slope of the coulometric titration curve, representing the slope of the open-circuit potential versus the lithium concentration in the electrode at a certain concentration; $(dE)/(dt^{1/2})$ is the slope of the polarization voltage versus $t^{1/2}$ curve; and L is the lithium-ion diffusion distance.

In some embodiments, the electrode material is a positive electrode material. The positive electrode material refers to a material added to a positive electrode plate that provides active ions during battery charging.

[Method for preparing electrode material]

An embodiment of the present application provides a method for preparing an electrode material, including:

Mix a lithium source, a sodium source, and a source of element M, and sinter the mixture in an inert atmosphere to obtain the electrode material; where the inert atmosphere is a pure inert gas or an atmosphere with an inert gas volume content greater than or equal to 80%.

The electrode material includes a compound $Li_{m-x}Na_xMO_y$, where M includes one or more elements selected from Ni, Co, Fe, Mn, Zn, Mg, Ca, Cu, Sn, Mo, Ru, Ir, V, Nb, or Cr; $2 \le m \le 5$; $0.04 \le x \le 1$; and $2 \le y \le 4$.

Therefore, in the present application, an electrode material is obtained by doping a certain amount of sodium to partially substitute a portion of lithium in the lithium-rich metal oxide material. Since the radius of sodium ions is larger than that of lithium ions, doping a certain amount of sodium facilitates the expansion of interlayer spacing in the crystal lattice, reducing the resistance to lithium-ion extraction from the crystal lattice, thereby increasing the charging capacity of the battery. Additionally, this approach improves the effective utilization rate of lithium ions in the material, reducing costs.

In some embodiments, a molar ratio of lithium element in the lithium source to sodium element in the sodium source is 2 to 99. For example, the molar ratio may be 2, 5, 7, 9, 10, 15, 20, 24, 26, 30, 33, 35, 37, 40, 45, 50, 54, 57, 60, 65, 70, 75, 80, 85, 90, 93, 95, 97, 99, or falls within a range defined by any two of these values.

In some embodiments, the sintering temperature is 400°C to 1000°C, optionally 500°C to 1000°C, more optionally 600°C to 900°C. For example, the sintering temperature may be 400°C, 450°C, 500°C, 560°C, 600°C, 640°C, 680°C, 700°C, 720°C, 730°C, 750°C, 800°C, 870°C, 900°C, 950°C, 970°C, 1000°C, or falls within a range defined by any two of these values; and/or,

the sintering time is 1 h to 15 h, optionally 2 h to 15 h, more optionally 4 h to 12 h. For example, the sintering time may be 1 h, 2 h, 3 h, 4 h, 5 h, 6 h, 7 h, 8 h, 9 h, 10 h, 11 h, 12 h, 13 h, 14 h, 15 h, or falls within a range defined by any two of these values.

Therefore, the use of the above sintering temperature and/or sintering time facilitates doping an appropriate amount of sodium at lithium sites in the electrode material, thereby reducing the resistance to lithium-ion extraction and increasing the charging capacity of the battery.

In some embodiments, the method further includes performing crushing and sieving; and/or,

in the method, the mixing is performed by ball milling.

In some embodiments, the lithium source, the sodium source, and the source of element M each independently include one or more of an oxide, hydroxide, hydrated hydroxide, halide, sulfate, carbonate, nitrate, oxalate, and acetate; optionally, the sodium source includes one or more of $Na_2O$, $Na_2CO_3$, $Na_2C_2O_4$, and $CH_3COONa$.

[Positive electrode plate]

A positive electrode plate generally includes a positive electrode current collector and a positive electrode film layer disposed on at least one surface of the positive electrode current collector, where the positive electrode film layer includes the electrode material described above in the present application or an electrode material prepared by the method described above in the present application.

For example, the positive electrode current collector has two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, or silver alloy) on the polymer material substrate (for example, a substrate of polypropylene (PP), polyethylene terephthalate (PET), polybutylene terephthalate (PBT), polystyrene (PS), or polyethylene (PE)).

In some embodiments, the positive electrode film layer may further include positive electrode active materials known in the art for batteries. For example, the positive electrode active material may include at least one of the following materials: olivine-structured lithium-containing phosphate, lithium transition metal oxide, and respective modified compounds thereof. However, the present application is not limited to these materials, and may alternatively use other conventional materials that can be used as positive electrode active materials for batteries. One of these positive electrode active materials may be used alone, or two or more of them may be used in combination. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), and $LiNi_{0.8}Co_{0.1}Mn_{0.1}O_2$ (NCM811 for short)), lithium nickel aluminum cobalt oxide (for example, $LiNi_{0.95}Co_{0.15}Al_{0.05}O_2$), and the like. Examples of the olivine-structured lithium-containing phosphate may include but are not limited to at least one of lithium iron phosphate (for example, $LiFePO_4$ (LFP for short)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared in the following manner: The constituents used for preparing the positive electrode plate are dispersed in a solvent (for example, N-methylpyrrolidone) to form a positive electrode slurry; and the positive electrode slurry is applied onto the positive electrode current collector, followed by processes such as drying and cold pressing, to obtain the positive electrode plate.

[Negative electrode plate]

A negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on the polymer material substrate (for example, a substrate of polypropylene (PP), polyethylene terephthalate (PET), polybutylene terephthalate (PBT), polystyrene (PS), or polyethylene (PE)).

In some embodiments, the negative electrode active material may be a negative electrode active material known in the art for batteries. For example, the negative electrode active material may include at least one of the following materials: artificial graphite, natural graphite, soft carbon, hard carbon, silicon-based material, tin-based material, and lithium titanate. The silicon-based material may be at least one selected from elemental silicon, silicon-oxygen compound, silicon-carbon composite, silicon-nitrogen composite, or silicon alloy. The tin-based material may be at least one selected from elemental tin, tin-oxygen compound, or tin alloy. However, the present application is not limited to these materials, and may alternatively use other conventional well-known materials that can be used as negative electrode active materials for batteries. One of these negative electrode active materials may be used alone, or more than two of them may be used in combination.

In some embodiments, the negative electrode film layer further optionally includes a binder. For example, the binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode plate may be prepared in the following manner: The constituents used for preparing the negative electrode plate, for example, the negative electrode active material, the conductive agent, the binder, and any other constituents, are dispersed in a solvent (for example, deionized water) to form a negative electrode slurry; and the negative electrode slurry is applied onto the negative electrode current collector, followed by processes such as drying and cold pressing, to obtain the negative electrode plate.

[Electrolyte]

The electrolyte conducts ions between the positive electrode plate and the negative electrode plate. The electrolyte is not specifically limited in the present application, and may be selected as required. For example, the electrolyte may be in a liquid state, a gel state, or an all-solid-state.

In some embodiments, the electrolyte is liquid and includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, methyl ethyl sulfone, and diethyl sulfone.

In some embodiments, the electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

[Separator]

In some embodiments, the secondary battery further includes a separator. The separator is not limited to a particular type in the present application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, which is not particularly limited. When the separator is a multi-layer composite film, all layers may be made of the same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the above electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, and polybutylene succinate may be listed.

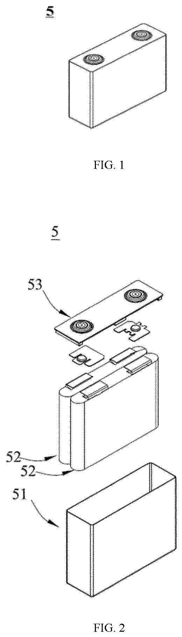

The secondary battery is not limited to a particular shape in the present application, and may be cylindrical, rectangular, or of any other shapes. For example, FIG. 1 shows a secondary battery 5 of a rectangular structure as an example.

In some embodiments, referring to FIG. 2, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be formed into an electrode assembly 52 through winding or lamination. The electrode assembly 52 is packaged in the accommodating cavity. The liquid electrolyte infiltrates the electrode assembly 52. The secondary battery 5 may include one or more electrode assemblies 52, and persons skilled in the art may make choices according to specific actual requirements.

In some embodiments, secondary batteries may be assembled into a battery module, and the battery module may include one or more secondary batteries. The specific quantity may be chosen by persons skilled in the art based on use and capacity of the battery module.

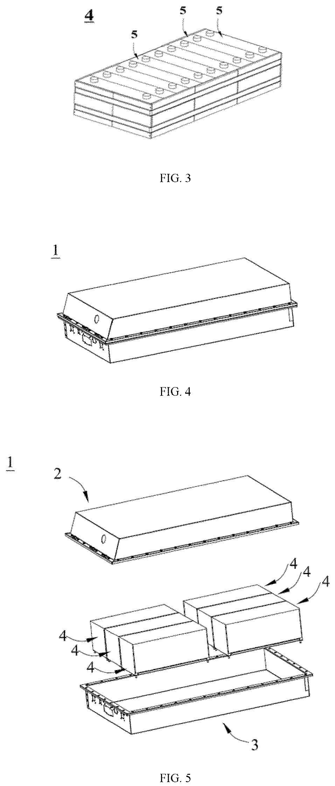

FIG. 3 shows a battery module 4 as an example. Referring to FIG. 3, in the battery module 4, a plurality of secondary batteries 5 may be sequentially arranged along a length direction of the battery module 4. Certainly, the battery cells may alternatively be arranged in any other manner. Further, the plurality of secondary batteries 5 may be fastened by fasteners.

Optionally, the battery module 4 may further include a shell with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art based on use and capacity of the battery pack.

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

Additionally, the present application further provides an electric apparatus. The electric apparatus includes at least one of the secondary battery, the battery module, or the battery pack provided in the present application. The secondary battery, the battery module, or the battery pack may be used as a power source of the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, battery module, or battery pack may be selected for the electric apparatus depending on requirements for using the electric apparatus.

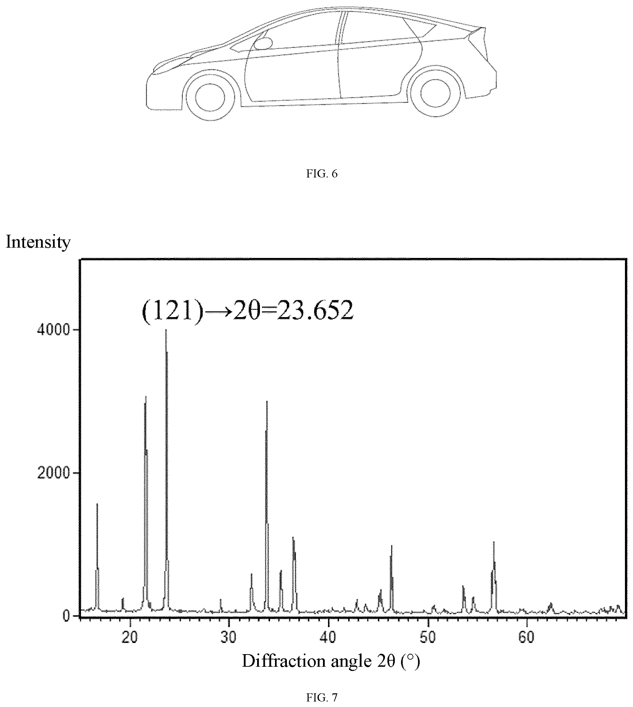

FIG. 6 shows an electric apparatus as an example. The electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

[Examples]

The following describes examples of the present application. The examples described below are illustrative and merely used for explaining the present application, and cannot be construed as limitations on the present application. Examples whose technical solutions or conditions are not specified are made in accordance with technical solutions or conditions described in literature in the field or made in accordance with product instructions. The reagents or instruments used are all conventional products that are commercially available if no manufacturer is indicated.

**Example 6**

(1) Preparation of sodium-doped lithium-rich metal oxide $Li_{4.5}Na_{0.5}FeO_4$: Lithium hydroxide, sodium hydroxide, and ferric oxide were mixed through ball milling, where a molar ratio of lithium element in lithium hydroxide, sodium element in sodium hydroxide, and iron element in ferric oxide was 4.55:0.52:1, the mixture was heated to 750°C in a nitrogen atmosphere and sintered for 8 h, naturally cooled, and crushed and sieved in a dry environment to obtain the sodium-doped lithium-rich metal oxide $Li_{4.5}Na_{0.5}FeO_4$ as a positive electrode material.

(2) Preparation of positive electrode plate: The sodium-doped lithium-rich metal oxide $Li_{4.5}Na_{0.5}FeO_4$, binder polyvinylidene fluoride (PVDF), and conductive agent acetylene black at a mass ratio of 97:2:1 were dissolved in solvent N-methylpyrrolidone (NMP), the mixture was fully stirred and mixed uniformly to prepare a positive electrode slurry; the positive electrode slurry was uniformly applied onto a positive electrode current collector aluminum foil, followed by drying, cold pressing, and slitting, to obtain the positive electrode plate.

(3) Preparation of negative electrode plate: Negative electrode active material artificial graphite, conductive agent acetylene black, binder styrene-butadiene rubber (SBR), and thickener sodium carboxymethyl cellulose (CMC-Na) at a mass ratio of 96.0:1.5:1.5:1.0 were dissolved in deionized water, the mixture was fully stirred and mixed uniformly to prepare a negative electrode slurry; the negative electrode slurry was applied onto a negative electrode current collector copper foil, followed by drying, cold pressing, and slitting, to obtain the negative electrode plate.

(4) Separator: A polypropylene film was used.

(5) Preparation of electrolyte: Ethylene carbonate (EC), ethyl methyl carbonate (EMC), and diethyl carbonate (DEC) were mixed at a volume ratio of 1:1:1, and then $LiPF_6$ was uniformly dissolved in the above solution, to obtain the electrolyte. In the electrolyte, a concentration of $LiPF_6$ was 1 mol/L.

(6) Preparation of secondary battery: The above positive electrode plate, separator, and negative electrode plate were stacked in sequence and wound to obtain an electrode assembly; the electrode assembly was placed in an outer package, and the prepared electrolyte was added, followed by processes such as packaging, standing, formation, and aging, to obtain a secondary battery.

The preparation methods of secondary batteries in Examples 1 to 5, 7 to 28, and Comparative Examples 1 to 6 are similar to that of Example 6, with differences in the preparation methods of positive electrode materials shown in Table 1 and different parameters shown in Table 2.

In Table 1, the molar ratio of the lithium source, sodium source, and source of element M refers to the molar ratio of lithium element in the lithium source, sodium element in the sodium source, and element M in the source of element M.

**Table 1: Preparation methods of positive electrode materials for Examples 1 to 28 and Comparative Examples 1 to 6**

| Number | Positive electrode material | Molar ratio of lithium source, sodium source, and source of element M | Sintering temperature (°C) | Sintering time (h) |
|---|---|---|---|---|
| Example 1 | $Li_{1.8}Na_{0.2}NiO_2$ | 1.83:0.22:1 | 720 | 8 |
| Example 2 | $Li_{1.96}Na_{0.04}NiO_2$ | 1.99:0.06:1 | 720 | 8 |
| Example 3 | $Li_{1.6}Na_{0.4}NiO_2$ | 1.63:0.42:1 | 720 | 8 |
| Example 4 | $Li_{1.98}Na_{0.02}NiO_2$ | 2.01:0.04:1 | 720 | 8 |
| Example 5 | $Li_{1.5}Na_{0.5}NiO_2$ | 1.53:0.52:1 | 720 | 8 |
| Example 6 | $Li_{4.5}Na_{0.5}FeO_4$ | 4.55:0.52:1 | 750 | 8 |
| Example 7 | $Li_{4.9}Na_{0.1}FeO_4$ | 4.95:0.12:1 | 750 | 8 |
| Example 8 | $Li_{4.75}Na_{0.25}FeO_4$ | 4.80:0.27:1 | 750 | 8 |
| Example 9 | $Li_{4.25}Na_{0.75}FeO_4$ | 4.30:0.77:1 | 750 | 8 |
| Example 10 | $Li_{4.0}Na_{1.0}FeO_4$ | 4.05:1.02:1 | 750 | 8 |
| Example 11 | $Li_{4.5}Na_{0.5}FeO_4$ | 4.55:0.52:1 | 750 | 8 |
| Example 12 | $Li_{4.5}Na_{0.5}FeO_4$ | 4.55:0.52:1 | 750 | 8 |
| Example 13 | $Li_{4.5}Na_{0.5}FeO_4$ | 4.55:0.52:1 | 750 | 8 |
| Example 14 | $Li_{4.5}Na_{0.5}FeO_4$ | 4.55:0.52:1 | 750 | 8 |
| Example 15 | $Li_{4.5}Na_{0.5}FeO_4$ | 4.55:0.52:1 | 500 | 8 |
| Example 16 | $Li_{4.5}Na_{0.5}FeO_4$ | 4.55:0.52:1 | 600 | 8 |
| Example 17 | $Li_{4.5}Na_{0.5}FeO_4$ | 4.55:0.52:1 | 900 | 8 |

(continued)

| Number | Positive electrode material | Molar ratio of lithium source, sodium source, and source of element M | Sintering temperature (°C) | Sintering time (h) |
|---|---|---|---|---|
| Example 18 | $Li_{4.5}Na_{0.5}FeO_4$ | 4.55:0.52:1 | 1,000 | 8 |
| Example 19 | $Li_{4.5}Na_{0.5}FeO_4$ | 4.55:0.52:1 | 750 | 2 |
| Example 20 | $Li_{4.5}Na_{0.5}FeO_4$ | 4.55:0.52:1 | 750 | 4 |
| Example 21 | $Li_{4.5}Na_{0.5}FeO_4$ | 4.55:0.52:1 | 750 | 12 |
| Example 22 | $Li_{4.5}Na_{0.5}FeO_4$ | 4.55:0.52:1 | 750 | 15 |
| Example 23 | $Li_{4.95}Na_{0.05}FeO_4$ | 5.0:0.07:1 | 750 | 8 |
| Example 24 | $Li_{4.5}Na_{0.5}FeO_4$ | 4.55:0.52:1 | 400 | 1 |
| Example 25 | $Li_{1.8}Na_{0.2}CuO_2$ | 1.83:0.22:1 | 720 | 8 |
| Example 26 | $Li_{2.7}Na_{0.3}NbO_4$ | 2.74:0.32:1 | 730 | 8 |
| Example 27 | $Li_{1.8}Na_{0.2}MnO_3$ | 1.83:0.22:1 | 725 | 8 |
| Example 28 | $Li_{2.7}Na_{0.3}VO_4$ | 2.74:0.32:1 | 730 | 8 |
| Comparative Example 1 | $Li_5FeO_4$ | 5.05:0:1 | 750 | 8 |
| Comparative Example 2 | $Li_2NiO_2$ | 2.03:0:1 | 720 | 8 |
| Comparative Example 3 | $Li_2CuO_2$ | 2.03:0:1 | 720 | 8 |
| Comparative Example 4 | $Li_2MnO_3$ | 2.03:0:1 | 725 | 8 |
| Comparative Example 5 | $Li_3NbO_4$ | 3.04:0:1 | 730 | 8 |
| Comparative Example 6 | $Li_{3.5}Na_{1.5}FeO_4$ | 3.55:1.52:1 | 750 | 8 |

*Considering potential losses during preparation, the molar ratios of the lithium source and sodium source are slightly higher than the molar ratios of lithium and sodium elements in the chemical formula. However, this does not affect the preparation of positive electrode materials conforming to the chemical formula.

**Table 2: Parameter results for Examples 1-28 and Comparative Examples 1-6**

| Number | Positive electrode material | x | m | y | x/m | Positive electrode material Dv50 ($\mu$m) | Sintering temperature (°C) | Sintering time (h) | 2θ value corresponding to crystal plane of strongest peak in X-ray diffraction spectrum of positive electrode material (crystal plane) | Total content of free lithium and free sodium in positive electrode material (wt%) | Lithium-ion diffusion coefficient of positive electrode material ($cm^2$/s) |
|---|---|---|---|---|---|---|---|---|---|---|---|
| Example 1 | $Li_{1.8}Na_{0.2}NiO_2$ | 0.2 | 2 | 2 | 0.1 | 6 | 720 | 8 | 24.849°(101) | 0.113 | $5.7\times10^{-7}$ |
| Example 2 | $Li_{1.96}Na_{0.04}NiO_2$ | 0.04 | 2 | 2 | 0.02 | 6 | 720 | 8 | 25.651°(101) | 0.154 | $1.5\times10^{-8}$ |
| Example 3 | $Li_{1.6}Na_{0.4}NiO_2$ | 0.4 | 2 | 2 | 0.2 | 6 | 720 | 8 | 24.313°(101) | 0.432 | $4.1\times10^{-9}$ |
| Example 4 | $Li_{1.98}Na_{0.02}NiO_2$ | 0.02 | 2 | 2 | 0.01 | 6 | 720 | 8 | 25.703°(101) | 0.134 | $6.1\times10^{-8}$ |
| Example 5 | $Li_{1.5}Na_{0.5}NiO_2$ | 0.5 | 2 | 2 | 0.25 | 6 | 720 | 8 | 24.129°(101) | 0.534 | $8.3\times10^{-10}$ |
| Example 6 | $Li_{4.5}Na_{0.5}FeO_4$ | 0.5 | 5 | 4 | 0.1 | 6 | 750 | 8 | 23.331°(121) | 0.1576 | $4.5\times10^{-9}$ |
| Example 7 | $Li_{4.9}Na_{0.1}FeO_4$ | 0.1 | 5 | 4 | 0.02 | 6 | 750 | 8 | 23.624°(121) | 0.5764 | $5.8\times10^{-13}$ |
| Example 8 | $Li_{4.75}Na_{0.25}FeO_4$ | 0.25 | 5 | 4 | 0.05 | 6 | 750 | 8 | 23.459°(121) | 0.25 | $4.5\times10^{-12}$ |
| Example 9 | $Li_{4.25}Na_{0.75}FeO_4$ | 0.75 | 5 | 4 | 0.15 | 6 | 750 | 8 | 23.014°(121) | 0.2156 | $1.3\times10^{-10}$ |
| Example 10 | $Li_{4.0N}aFeO_4$ | 1 | 5 | 4 | 0.2 | 6 | 750 | 8 | 22.765°(121) | 0.8462 | $2.7\times10^{-13}$ |
| Example 11 | $Li_{4.5}Na_{0.5}FeO_4$ | 0.5 | 5 | 4 | 0.1 | 2 | 750 | 8 | 23.331°(121) | 0.1842 | $1.1\times10^{-9}$ |
| Example 12 | $Li_{4.5}Na_{0.5}FeO_4$ | 0.5 | 5 | 4 | 0.1 | 4 | 750 | 8 | 23.331°(121) | 0.1728 | $3.7\times10^{-b}$ |
| Example 13 | $Li_{4.5}Na_{0.5}FeO_4$ | 0.5 | 5 | 4 | 0.1 | 8 | 750 | 8 | 23.331°(121) | 0.1582 | $42\times10^{-1}$ |
| Example 14 | $Li_{4.5}Na_{0.5}FeO_4$ | 0.5 | 5 | 4 | 0.1 | 10 | 750 | 8 | 23.331°(121) | 0.1578 | $2.9\times10^{-12}$ |
| Example 15 | $Li_{4.5}Na_{0.5}FeO_4$ | 0.5 | 5 | 4 | 0.1 | 6 | 500 | 8 | 23.331°(121) | 0.9708 | $3.1\times10^{-13}$ |
| Example 16 | $Li_{4.5}Na_{0.5}FeO_4$ | 0.5 | 5 | 4 | 0.1 | 6 | 600 | 8 | 23.331°(121) | 0.6422 | $4.7\times10^{-12}$ |
| Example 17 | $Li_{4.5}Na_{0.5}FeO_4$ | 0.5 | 5 | 4 | 0.1 | 6 | 900 | 8 | 23.331°(121) | 0.2248 | $1.8\times10^{-10}$ |
| Example 18 | $Li_{4.5}Na_{0.5}FeO_4$ | 0.5 | 5 | 4 | 0.1 | 6 | 1000 | 8 | 23.331°(121) | 0.2634 | $7.2\times10^{-10}$ |
| Example 19 | $Li_{4.5}Na_{0.5}FeO_4$ | 0.5 | 5 | 4 | 0.1 | 6 | 750 | 2 | 23.331°(121) | 0.9234 | $3.3\times10^{-13}$ |
| Example 20 | $Li_{4.5}Na_{0.5}FeO_4$ | 0.5 | 5 | 4 | 0.1 | 6 | 750 | 4 | 23.331°(121) | 0.6034 | $7.8\times10^{-12}$ |
| Example 21 | $Li_{4.5}Na_{0.5}FeO_4$ | 0.5 | 5 | 4 | 0.1 | 6 | 750 | 12 | 23.331°(121) | 0.1952 | $8.1\times10^{-10}$ |
| Example 22 | $Li_{4.5}Na_{0.5}FeO_4$ | 0.5 | 5 | 4 | 0.1 | 6 | 750 | 15 | 23.331°(121) | 0.2356 | $0.2\times10^{-10}$ |

| Number | Positive electrode material | x | m | y | x/m | Positive electrode material Dv50 ($\mu$m) | Sintering temperature (°C) | Sintering time (h) | 2θ value corresponding to crystal plane of strongest peak in X-ray diffraction spectrum of positive electrode material (crystal plane) | Total content of free lithium and free sodium in positive electrode material (wt%) | Lithium-ion diffusion coefficient of positive electrode material ($cm^2/s$) |
|---|---|---|---|---|---|---|---|---|---|---|---|
| Example 23 | $Li_{4.95}Na_{0.05}FeO_4$ | 0.05 | 5 | 4 | 0.01 | 12 | 750 | 8 | 23.641°(121) | 0.2054 | $2.1\times10^{-13}$ |
| Example 24 | $Li_{4.5}Na_{0.5}FeO_4$ | 0.5 | 5 | 4 | 0.1 | 1 | 400 | 1 | 23.331°(121) | 0.9742 | $1.3\times10^{-13}$ |
| Example 25 | $Li_{1.8}Na_{0.2}CuO_2$ | 0.2 | 2 | 2 | 0.1 | 6 | 720 | 8 | 26.002°(101) | 0.1106 | $4.2\times10^{-7}$ |
| Example 26 | $Li_{2.7}Na_{0.3}NbO_4$ | 0.3 | 3 | 4 | 0.1 | 6 | 730 | 8 | 14.531°(110) | 0.1446 | $6.0\times10^{-8}$ |
| Example 27 | $Li_{1.8}Na_{0.2}MnO_3$ | 0.2 | 2 | 3 | 0.1 | 6 | 725 | 8 | 18.431°(001) | 0.1156 | $4.0\times10^{-7}$ |
| Example 28 | $Li_{2.7}Na_{0.3}VO_4$ | 0.3 | 3 | 4 | 0.1 | 6 | 730 | 8 | 14.531°(110) | 0.1512 | $5.8\times10^{-8}$ |
| Comparative Example 1 | $Li_5FeO_4$ | / | / | / | / | 6 | 750 | 8 | 23.657°(121) | 1.3642 | $1.3\times10^{-15}$ |
| Comparative Example 2 | $Li_2NiO_2$ | / | / | / | / | 6 | 720 | 8 | 25.746°(101) | 1.0842 | $5.7\times10^{-14}$ |
| Comparative Example 3 | $Li_2CuO_2$ | / | / | / | / | 6 | 720 | 8 | 26.311°(101) | 1.1028 | $4.2\times10^{-14}$ |
| Comparative Example 4 | $Li_2MnO_3$ | / | / | / | / | 6 | 725 | 8 | 18.695°(001) | 1.1231 | $3.1\times10^{-4}$ |
| Comparative Example 5 | $Li_3NbO_4$ | / | / | / | / | 6 | 730 | 8 | 14.882°(110) | 1.0022 | $2.0\times10^{-14}$ |
| Comparative Example 6 | $Li_{3.5}Na_{1.5}FeO_4$ | 1.5 | 5 | 4 | 0.3 | 6 | 750 | 8 | 21.886°(121) | 0.9858 | $1.1\times10^{-13}$ |

**Material and Battery Testing**

(1) Testing of median particle size by volume Dv50

The median particle size by volume Dv50 was measured according to the method specified in the national standard GB/T 19077-2016 "Particle Size Analysis - Laser Diffraction Methods", using deionized water as the solvent, with ultrasonic treatment for 5 minutes before testing.

(2) X-ray diffraction testing

Testing was performed using a Bruker D8 Discover X-ray diffractometer in accordance with standard JISK 0131-1996. A copper target was used as an anode target, a Ni filter with a thickness of 0.02 mm was used to filter $CuK_\beta$, $CuK_\alpha$ radiation was used as a radiation source with a wavelength of 0.154178 nm, a scanning $2\theta$ angle range was 15° to 70°, and a scanning rate was 4°/min. The X-ray diffraction spectrum of the sodium-doped lithium-rich metal oxide $Li_{4.5}Na_{0.5}FeO_4$ in Example 1 is shown in FIG. 7.

(3) Testing of total mass content of free lithium and free sodium

The total mass content of free lithium and free sodium in the sodium-doped lithium-rich metal oxide was measured by titration with a standard hydrochloric acid solution, referring to the national standard GB/T9725-2007 "Chemical Reagent - General Rules for Potentiometric Titration".
The specific method was as follows:
A sodium-doped lithium-rich metal oxide was added to deionized water, stirred at 200 rpm for 5 min, and then filtered. The filtrate was titrated with a standard hydrochloric acid solution to perform an acid-base neutralization reaction, using a composite pH electrode as an indicator electrode to obtain a pH curve and an ERC curve. During titration, potential jump points EP1 and EP2 were generated. A total volume of hydrochloric acid consumed at potential jump point EP1 was $V_1$, and a total volume of hydrochloric acid consumed at potential jump point EP2 was $V_2$. The total mass content d of free lithium and free sodium in the sodium-doped lithium-rich metal oxide was calculated according to the following formula:

$$d = 10^4 \times C \times V_a \times V_b \times (6946.84V_2 - 4.24V_1) / m$$

where,

C was a molar concentration of the standard hydrochloric acid solution, in mol/L, which was 0.5 mol/L in this test method;
$V_a$ was the volume of deionized water added, in mL, which was 100 mL in this test method;
$V_b$ was the volume of the filtrate used for titration, in mL;
$V_1$ was the total volume of hydrochloric acid consumed at potential jump point EP1, in L;
$V_2$ was the total volume of hydrochloric acid consumed at potential jump point EP2, in L; and
m was the mass of the sodium-doped lithium-rich metal oxide, in mg, which was 2 mg in this test method.

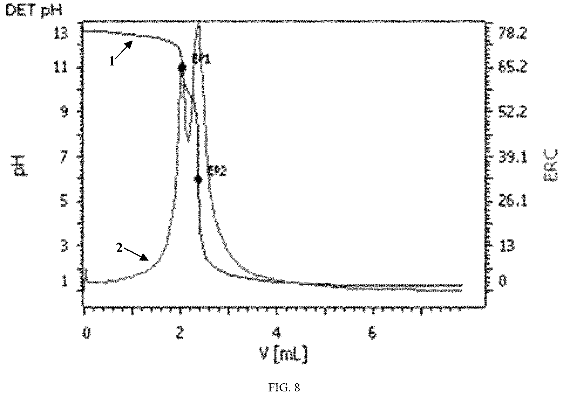

FIG. 8 shows the pH curve and ERC curve of the sodium-doped lithium-rich metal oxide in Example 1. Curve 1 is the pH curve, and Curve 2 is the ERC curve obtained by second-order differentiation of the pH curve. The ERC curve has two maxima (peaks), and the intersections of vertical lines drawn at the two maxima with the pH curve are the potential jump points EP1 and EP2.

(4) Testing of lithium-ion diffusion coefficient

The lithium-ion diffusion coefficient was tested using the conventional GITT method in the art and calculated based on Fick's first law and Fick's second law. The test method was conducted according to the "results and discussion" section in the literature "Yang et al., Electrochimica Acta, 2012, 66:88-93".
The sodium-doped lithium-rich metal oxide was ground and added to a powder microelectrode, and the powder microelectrode was then connected to an electrochemical workstation for coulometric titration. A pulse current of 20 $\mu$A was used, with a titration time of 1 h and an interval of 4 h. After obtaining a GITT curve, the lithium-ion diffusion coefficient was calculated according to the following formula:

$$D = \frac{4}{\pi}\left(\frac{V_m}{A \times F \times n}\right)^2 \left[I_0\left(\frac{dE}{dx}\right) / \left(\frac{dE}{d\sqrt{t}}\right)\right]^2 (t \ll L^2/D)$$

where D is the lithium-ion diffusion coefficient; $I_0$ was the applied pulse current ($\mu$A); Vm was the molar volume of the sodium-doped lithium-rich metal oxide ($cm^3$/mol); F was the Faraday constant; A was an electrode surface area ($cm^2$); n was the charge number of lithium ions, n = 1; dE/dx was the slope of the coulometric titration curve, representing the slope of the open-circuit potential versus the lithium concentration in the electrode at a certain concentration; (dE)/(dt$^{1/2}$) was the slope of the polarization voltage versus t$^{1/2}$ curve; and L was the lithium-ion diffusion distance.

(5) Testing of first-cycle charging capacity

In a constant temperature environment at 25°C, the battery was charged at a constant current rate of 0.1C to 4.25V and left standing for 5 min, and the first-cycle charging capacity of the battery was recorded. The first-cycle charging gram capacity of the battery was obtained by dividing the first-cycle charging capacity by the mass of the positive electrode material.

The results of items (1) to (4) are shown in Table 2, and the results of item (5) are shown in Table 3.

**Table 3: Performance test results for Examples 1 to 28 and Comparative Examples 1 to 6**

| Number | First-cycle charging gram capacity (mAh/g) |
|---|---|
| Example 1 | 421 |
| Example 2 | 405 |
| Example 3 | 385 |
| Example 4 | 401 |
| Example 5 | 371 |
| Example 6 | 688 |
| Example 7 | 621 |
| Example 8 | 632 |
| Example 9 | 645 |
| Example 10 | 628 |
| Example 11 | 653 |
| Example 12 | 672 |
| Example 13 | 661 |
| Example 14 | 647 |
| Example 15 | 620 |
| Example 16 | 631 |
| Example 17 | 643 |
| Example 18 | 626 |
| Example 19 | 625 |
| Example 20 | 638 |
| Example 21 | 649 |
| Example 22 | 633 |
| Example 23 | 618 |
| Example 24 | 615 |
| Example 25 | 419 |
| Example 26 | 385 |
| Example 27 | 384 |

(continued)

| Number | First-cycle charging gram capacity (mAh/g) |
|---|---|
| Example 28 | 383 |
| Comparative Example 1 | 601 |
| Comparative Example 2 | 367 |
| Comparative Example 3 | 362 |
| Comparative Example 4 | 321 |
| Comparative Example 5 | 323 |
| Comparative Example 6 | 523 |

According to the above results:

Compared to Comparative Examples 1 and 6, the batteries in Examples 6 to 24 of the present application exhibited higher first-cycle charging gram capacities; compared to Comparative Example 2, the batteries in Examples 1 to 5 exhibited higher first-cycle charging gram capacities; compared to Comparative Example 3, the battery in Example 25 exhibited a higher first-cycle charging gram capacity; compared to Comparative Example 4, the battery in Example 27 exhibited a higher first-cycle charging gram capacity; and compared to Comparative Example 5, the battery in Example 26 exhibited a higher first-cycle charging gram capacity. Therefore, it can be learned that doping an appropriate amount of sodium at lithium sites facilitates enhancing the charging capacity of the battery.

Compared to Examples 3 and 5, the batteries in Examples 1, 2, and 4 of the present application exhibited further improved first-cycle charging gram capacities.

Compared to Examples 23 and 24, the batteries in Examples 6 to 22 exhibited further improved first-cycle charging gram capacities.

Compared to Examples 7 and 10, the batteries in Examples 6, 8, 9, 12, 17, and 21 exhibited further improved first-cycle charging gram capacities.

Compared to Examples 15, 18, and 19, the batteries in Examples 6, 8, 9, 12, 17, and 21 exhibited further improved first-cycle charging gram capacities.

It should be noted that the present application is not limited to the above embodiments. The above embodiments are merely examples, and embodiments having substantially the same constructions and the same effects as the technical idea within the scope of the technical solutions of the present application are all included in the technical scope of the present application. Additionally, without departing from the essence of the present application, various modifications made to the embodiments that can be conceived by persons skilled in the art, and other forms constructed by combining some of the constituent elements in the embodiments are also included in the scope of the present application.

**Claims**

1. An electrode material, comprising $Li_{m-x}Na_xMO_y$; wherein
   M comprises one or more elements selected from Ni, Co, Fe, Mn, Zn, Mg, Ca, Cu, Sn, Mo, Ru, Ir, V, Nb, or Cr; and

$$2 \le m \le 5; \ 0.04 \le x \le 1; \text{ and } 2 \le y \le 4.$$

2. The electrode material according to claim 1, wherein $0.01 \le x/m \le 0.25$, optionally $0.02 \le x/m \le 0.2$, more optionally $0.05 \le x/m \le 0.15$.

3. The electrode material according to claim 1 or 2, wherein a median particle size by volume Dv50 of the electrode material is 1 μm to 12 μm, optionally 2 μm to 10 μm, more optionally 3 μm to 6 μm.

4. The electrode material according to any one of claims 1 to 3, wherein the electrode material further comprises free lithium and free sodium, and, based on a mass calculation of the electrode material, a total mass content of the free lithium and free sodium is less than or equal to 1%, optionally less than or equal to 0.5%.

5. The electrode material according to any one of claims 1 to 4, wherein a 2θ value of a strongest peak in an X-ray diffraction spectrum of the electrode material is smaller than a 2θ value of a strongest peak in an X-ray diffraction spectrum of an electrode material not containing sodium; and the electrode material not containing sodium comprises $Li_{m'}M'O_{y'}$, wherein M' comprises the same elements as M, m is equal to m, and y' is equal to y.

6. The electrode material according to any one of claims 1 to 5, comprising one or more of $Li_{2-x}Na_xM^1O_2$, $Li_{2-x}Na_xM^2O_3$, $Li_{3-x}Na_xM^3O_4$, or $Li_{5-x}Na_xM^4O_4$; wherein
   $M^1$ comprises one or more elements selected from Ni, Co, Fe, Mn, Zn, Mg, Ca, or Cu; $M^2$ comprises one or more elements selected from Mn, Sn, Mo, Ru, or Ir; $M^3$ comprises one or more elements selected from V, Nb, Cr, or Mo; $M^4$ comprises one or more elements selected from Fe, Cr, V, or Mo; and x in $Li_{2-x}Na_xM^1O_2$, $Li_{2-x}Na_xM^2O_3$, $Li_{3-x}Na_xM^3O_4$, and $Li_{5-x}Na_xM^4O_4$ is independently 0.04 to 1.

7. The electrode material according to any one of claims 1 to 6, comprising one or more of $Li_{1.8}Na_{0.2}NiO_2$, $Li_{1.96}Na_{0.04}NiO_2$, $Li_{1.6}Na_{0.4}NiO_2$, $Li_{1.98}Na_{0.02}NiO_2$, $Li_{1.5}Na_{0.5}NiO_2$, $Li_{1.8}Na_{0.2}CuO_2$, $Li_{1.8}Na_{0.2}MnO_3$, $Li_{2.7}Na_{0.3}VO_4$, $Li_{2.7}Na_{0.3}NbO_4$, $Li_{4.5}Na_{0.5}FeO_4$, $Li_{4.9}Na_{0.1}FeO_4$, $Li_{4.75}Na_{0.25}FeO_4$, $Li_{4.25}Na_{0.75}FeO_4$, $Li_{4.0}NaFeO_4$, or $Li_{4.95}Na_{0.05}FeO_4$.

8. The electrode material according to any one of claims 1 to 7, wherein a lithium-ion diffusion coefficient of the electrode material is greater than or equal to $1.0 \times 10^{-13}$ cm$^2$/s, optionally greater than or equal to $1.0 \times 10^{-10}$ cm$^2$/s.

9. The electrode material according to any one of claims 1 to 8, wherein the electrode material is a positive electrode material.

10. A method for preparing an electrode material, comprising:

    mixing a lithium source, a sodium source, and a source of element M, followed by sintering in an inert atmosphere to obtain the electrode material; wherein
    the electrode material comprises $Li_{m-x}Na_xMO_y$, wherein M comprises one or more elements selected from Ni, Co, Fe, Mn, Zn, Mg, Ca, Cu, Sn, Mo, Ru, Ir, V, Nb, or Cr; $2 \leq m \leq 5$; $0.04 \leq x \leq 1$; and $2 \leq y \leq 4$.

11. The method according to claim 10, wherein a molar ratio of lithium element in the lithium source to sodium element in the sodium source is 2 to 99.

12. The method according to claim 10 or 11, wherein the sintering temperature is 400°C to 1000°C, optionally 500°C to 1000°C, more optionally 600°C to 900°C; and/or,
    the sintering time is 1 h to 15 h, optionally 2 h to 15 h, more optionally 4 h to 12 h.

13. The method according to any one of claims 10 to 12, wherein the method further comprises performing crushing and sieving; and/or,
    in the method, the mixing is performed by ball milling.

14. The method according to any one of claims 10 to 13, wherein the lithium source, the sodium source, and the source of element M each independently comprise one or more of an oxide, hydroxide, hydrated hydroxide, halide, sulfate, carbonate, nitrate, oxalate, and acetate; optionally, the sodium source comprises one or more of $Na_2O$, $Na_2CO_3$, $Na_2C_2O_4$, and $CH_3COONa$.

15. A battery, comprising the electrode material according to any one of claims 1 to 9 or an electrode material prepared by the method according to any one of claims 10 to 14.

16. An electric apparatus, comprising the battery according to claim 15.

FIG. 1

FIG. 2

FIG. 3

FIG. 4

FIG. 5

FIG. 6

Intensity

$(121) \rightarrow 2\theta = 23.652$

Diffraction angle 2θ (°)

FIG. 7

FIG. 8

## INTERNATIONAL SEARCH REPORT

| International application No. |
|---|
| **PCT/CN2023/097762** |

| A. | CLASSIFICATION OF SUBJECT MATTER |
|---|---|

H01M4/48(2010.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电极, 正极, 阴极, 锂, 钠, electrode, positive, cathode, Li, Na, lithium, sodium

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111554920 A (JIANGXI FAR EAST BATTERY CO., LTD.) 18 August 2020 (2020-08-18) description, paragraphs 5-22 | 1-16 |
| X | CN 103078100 A (CENTRAL SOUTH UNIVERSITY) 01 May 2013 (2013-05-01) description, paragraphs 6-48 | 1-16 |
| X | CN 107591531 A (SOUTH CHINA NORMAL UNIVERSITY) 16 January 2018 (2018-01-16) description, paragraphs 5-92 | 1-16 |
| A | CN 101456586 A (ZHEJIANG UNIVERSITY OF TECHNOLOGY et al.) 17 June 2009 (2009-06-17) entire document | 1-16 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 January 2024** | **30 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/097762**

| Patent document cited in search report | | | Publication date (day/month/year) | Patent family member(s) | Publication date (day/month/year) |
|---|---|---|---|---|---|
| CN | 111554920 | A | 18 August 2020 | None | |
| CN | 103078100 | A | 01 May 2013 | None | |
| CN | 107591531 | A | 16 January 2018 | None | |
| CN | 101456586 | A | 17 June 2009 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 190772016 T
- GB 97252007 T

**Non-patent literature cited in the description**

- **YANG et al.** *Electrochimica Acta*, 2012, vol. 66, 88-93